# EUROPEAN PATENT SPECIFICATION

(11) **EP 2 676 419 B1**
(45) Date of publication and mention of the grant of the patent: **13.01.2016**
(21) Application number: 12709618.8
(22) Date of filing: 15.03.2012
(51) Int. Cl.: H04L 29/06, H04W 12/02, H04M 3/42

(54) **RECORDING COMMUNICATIONS**
AUFZEICHNUNG VON KOMMUNIKATIONEN
ENREGISTREMENT DE COMMUNICATIONS

(30) Priority: 21.03.2011 GB 201104702
(43) Date of publication of application: 25.12.2013
(73) Proprietor: Voxsmart Limited, Colchester, Essex CO6 4BS (GB)
(72) Inventor: ENOCH, John, Colchester Essex CO6 4BS (GB)
(74) Representative: Style, Kelda Camilla Karen
(86) International application number: PCT/EP2012/054545
(87) International publication number: WO 2012/126795

(56) References cited:
- US-A1- 2008 069 311
- US-B1- 7 860 222
- "Terrestrial Trunked Radio (TETRA); Security; Lawful Interception (LI) interface; Draft ETSI EN 301 040", IEEE, LIS, SOPHIA ANTIPOLIS CEDEX, FRANCE, vol. TETRA-6, no. V2.0.6, 1 October 2005 (2005-10-01), XP014035241, ISSN: 0000-0001
- "Lawful Interception (LI); Dynamic Triggering; Dynamic Triggering of Content of Communication Interception", ETSI DRAFT; LI(10)0086_DTS_102_677_V0.5.0_ON_DYNAMIC_T RIGGERING_OF_CONTENT_OF_COMMUNICATIONS_INT ERCEPTION, EUROPEAN TELECOMMUNICATIONS STANDARDS INSTITUTE (ETSI), 650, ROUTE DES LUCIOLES ; F-06921 SOPHIA-ANTIPOLIS ; FRANCE, no. V0.5.0, 8 March 2011 (2011-03-08), pages 1-38, XP014062836, [retrieved on 2011-03-08]

## Description

This disclosure relates generally to recording of a wireless device's communications. In particular the disclosure relates to a method of controlling the recording of a wireless device's communications, and a wireless device and controlling server operable in accordance with such a method.

Recording communications, in particular voice calls, from desktop phones has long been implemented by businesses for use in verifying advice or agreements that have taken place verbally over the phone. Typically, such recording would be implemented using a PBX (private branch exchange). The PBX is generally located on-site at the business's offices. The PBX routes calls originating from outside the business's offices, for example from a PSTN (public switched telephone network), to the private telephone lines of the business, and vice versa. A recording device at the PBX records these calls.

In today's society, business calls are regularly conducted using mobile phones. Many current technologies employed to record calls made to and from mobile phones are limited by poor user experience, for example connection delays, and also by security concerns. The PBX method described above in relation to recording calls from desktop phones has been adapted to record calls from mobile phones. This requires re-routing of calls off the mobile network via a PBX-PSTN gateway. Connection delays are of particular concern with this method. Another technology employed is the recording of calls at the mobile phone itself, and subsequent transfer of the recorded files. Security risks, for example the possibility that the mobile phone could be accessed to delete the file before transfer or to prevent transfer by switching off data communications, are prevalent with this method. Another possible technology is to record the calls at the mobile network. However, this requires the mobile network to be modified so as to be able to handle the recording. Additionally, such a method exposes the recordings to a third party, i.e. the mobile network, which introduces an extra security risk compared to fixed line recording of desktop phones in the office which can be entirely maintained and controlled internally.

A preferred method of recording calls made to and from mobile phones is to utilise the mobile phone network to aid recording of each call at a private recording device. In particular, multiparty calling, which is a standard mobile network feature, can be used to set up a three-way call between the two communicating devices and the recording device. Security risks are minimised because the recording is performed at a recording device which the business can maintain sole control of. Additionally, delays are minimised because there is no re-routing of the call off the mobile network to a PBX. The mobile phones on the call communicate over the mobile network as normal, with multiparty calling being used to enable recording of the call at the recording device.

However the success of utilising multiparty calling as a solution to recording calls made from and to a wireless device relies on the wireless network providing a good quality connection to the recording device. If the wireless device fails to connect to the recording device, for example because of service disruption on the network or because the recording device is unavailable, then the call may continue unrecorded. Interruptions to the recording or failure to record is generally considered unacceptable in call recording environments such as those described above. Additionally, regulatory conventions originally intended for regulating the manner in which landline calls are recorded in some cases apply to mobile calls. These regulatory conventions differ on a country-by-country basis, and adherence of a wireless device to the appropriate convention whilst roaming is important.

According to a first aspect, there is provided a method of controlling the recording of a wireless device's communications, the method comprising: recording the wireless device's communications according to a first recording policy; at the wireless device, detecting an event indicating a change in the recording environment of the wireless device; transmitting an alert from the wireless device to the controlling server identifying the event; at the controlling server, comparing the identified event to events defined by the recording protocol, and based on the comparison determining to instruct the wireless device to implement a second recording policy; transmitting an instruction from the controlling server to the wireless device to implement the second recording policy; and at the wireless device, modifying the operation of the wireless device so as to implement the second recording policy.

Suitably, the detected event is the change in location of the wireless device from a first jurisdiction to a second jurisdiction.

Suitably, the detected event is a failure in the connection between the wireless device and the recording device.

Suitably, the controlling server only determines to instruct the wireless device to implement the second recording policy if the number of alerts transmitted from the wireless device to the controlling server identifying failed connections to the recording device exceeds a threshold number.

Suitably, the detected event is that the subscriber identification module of the wireless device has been replaced.

Suitably, the method further comprises storing at the controlling server at least one identification number, and wherein the detected event is that the wireless device has connected to a device having the identification number.

Suitably, the first recording policy requires the wireless device to connect to the recording device so as to allow the recording device to record the wireless device's communications, and wherein the second recording policy requires the wireless device to disconnect from the recording device.

Suitably, the second recording policy requires the wireless device to disconnect from the recording device during a predetermined time period.

Suitably, the second recording policy further requires the wireless device to connect to an alternative recording device so as to allow the alternative recording device to record the wireless device's communications.

Suitably, the first recording policy enables the wireless device to perform communications, and wherein the second recording policy disables the wireless device from performing communications.

Suitably the method further comprises, prior to the step of transmitting an instruction from the controlling server to the wireless device to implement the second recording policy, authenticating the wireless device as being controlled by the controlling server, and only if that authentication is successful performing the transmitting step.

Suitably, the method further comprises, after the comparison step and prior to transmitting the instruction to implement the second recording policy: at the controlling server transmitting a trigger message to the wireless device; and at the wireless device responding to the trigger message by transmitting a request to the controlling server to change the recording policy.

Suitably, the method further comprises storing at the controlling server data identifying the wireless device and data identifying the recording device.

Suitably, the data identifying the wireless device includes an identification number of the wireless device and a user identification registered as valid for that wireless device.

Suitably, the system is a unified communications system in which communications are routed through an exchange server at which the communications are recorded, wherein the wireless device's communications bypass the exchange server.

According to a second aspect, there is provided a wireless device operable in accordance with first and second recording policies in a system comprising the wireless device, a recording device operable to record the wireless device's communications, and a controlling server operable to control the recording of the wireless device's communications in accordance with a recording protocol, the wireless device configured to: whilst implementing the first recording policy, detect an event indicating a change in the recording environment of the wireless device; transmit an alert to the controlling server identifying the event; receive an instruction from the controlling server instructing the wireless device to implement the second recording policy, the instruction based on a comparison of the identified event and events defined by the recording protocol; and modify the operation of the wireless device so as to implement the second recording policy.

Suitably, the wireless device is further configured to receive a trigger message from the controlling server, and to respond to that trigger message by transmitting a request to the controlling server to change the recording policy.

According to a third aspect, there is provided a controlling server operable to control the recording of a wireless device's communications in accordance with a recording protocol in a system comprising the wireless device, a recording device operable to record the wireless device's communications, and the controlling server, the controlling server configured to: receive an alert from the wireless device identifying that the wireless device has detected an event indicating a change in the recording environment of the wireless device whilst the wireless device is implementing a first recording policy; compare the identified event to events defined by the recording protocol, and based on the comparison determine to instruct the wireless device to implement a second recording policy; and transmit an instruction to the wireless device to implement the second recording policy.

Suitably, the controlling server is further configured to only determine to instruct the wireless device to implement the second recording policy if the number of alerts transmitted from the wireless device to the controlling server identifying failed connections to the recording device exceeds a threshold number.

Suitably, the controlling server is further configured to store at least one identification number, and wherein the detected event is that the wireless device has connected to a device having the identification number.

Suitably, the controlling server is further configured to, prior to transmitting an instruction from the controlling server to the wireless device to implement the second recording policy, authenticate the wireless device as being controlled by the controlling server, and only if that authentication is successful perform the transmitting step.

Suitably, the controlling server is further configured to, after the comparison step and prior to transmitting the instruction to implement the second recording policy, transmit a trigger message to the wireless device, and receive a request from the wireless device to change the recording policy.

Suitably, the controlling server is further configured to store data identifying the wireless device and data identifying the recording device.

According to a fourth aspect, there is provided a system comprising: a wireless device operable in accordance with first and second recording policies, and configured to detect an event indicating a change in the recording environment of the wireless device; a recording device operable to record the wireless device's communications; and a controlling server operable to control the recording of the wireless device's communications in accordance with a recording protocol, wherein the wireless device is configured, whilst implementing the first recording policy, to detect the event and to transmit an alert to the controlling server identifying the event, and wherein the controlling server is configured to compare the identified event to events defined by the recording protocol, and based on the comparison, to instruct the wireless device to implement the second recording policy, and is further configured to transmit an instruction to the wireless device to implement the second recording policy; and wherein the wireless device is further configured to modify the operation of the wireless device so as to implement the second recording policy.

According to a fifth aspect, there is provided computer readable media which when executed on a processor is arranged to perform the event detecting, alert transmitting and operation modifying steps of the method.

According to a sixth aspect, there is provided computer readable media which when executed on a processor is arranged to perform the comparison, determination and instruction transmitting steps of the method.

The following disclosure will now be described by way of example with reference to the accompanying drawings. In the drawings:
figure 1 illustrates an example system for recording communications between wireless devices;
figure 2 illustrates an example system for recording communications between a wireless device and a landline device;
figures 3, 4 and 5 each illustrate general methods of controlling the recording policy of a wireless device;
figure 6 is a flow diagram illustrating a method of controlling the recording policy of a wireless device that is unable to connect to its designated recording device;
figure 7 is a flow diagram illustrating a method of controlling the recording policy of a wireless device that has changed location;
figure 8 illustrates the components of an exemplary wireless device; and
figure 9 illustrates the components of an exemplary controlling server.

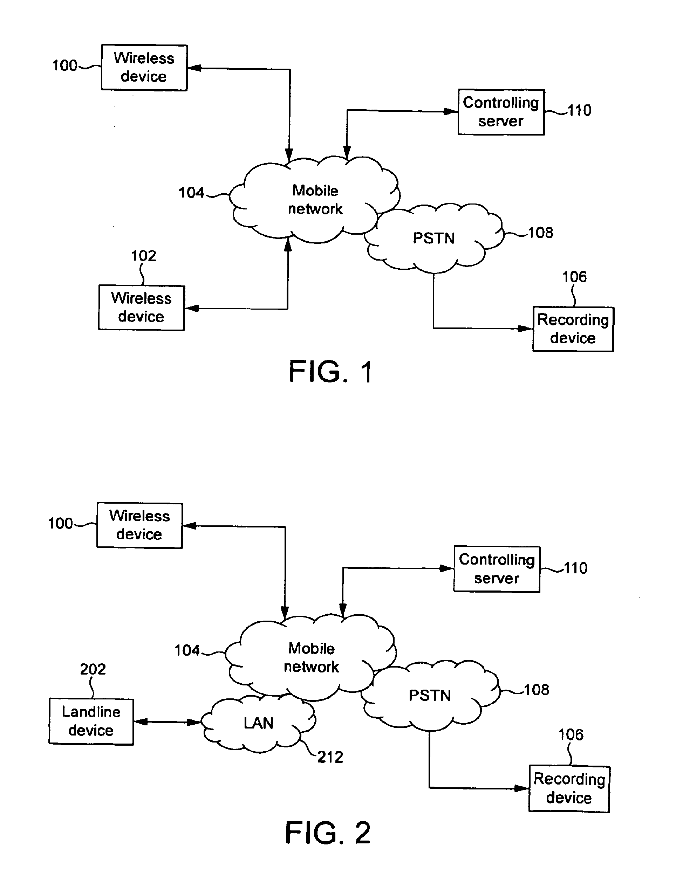

This disclosure is directed at controlling the recording of the communications of a wireless device. Figure 1 illustrates an example system in which may take place. Wireless device 100 communicates with wireless device 102 via mobile network 104. Wireless device 100 implements a designated recording policy (i.e. a recording protocol) in which its communications are recorded by recording device 106. The recording device 106 is typically a landline recorder connected to a PSTN 108. Suitably, a three-way connection is set up by the wireless device 100 in accordance with the designated recording policy when a communication with wireless device 102 is to be established. The three-way connection connects the wireless device 100, wireless device 102 and recording device 106 via the mobile network 104. A controlling server 110 controls the recording policy implemented by the wireless device 100. The controlling server 110 may be a landline server. Alternatively, the controlling server 110 may be wireless. The controlling server 110 is connected to the wireless device 100 via mobile network 104.

Figure 2 illustrates another example system. In this example, wireless device 100 communicates with landline device 202 via mobile network 104 and LAN (local area network) 212. Similarly to figure 1, wireless device 100 implements a designated recording policy (i.e. a recording protocol) in which its communications are recorded by recording device 106. The recording device 106 is typically a landline recorder connected to a PSTN 108. Suitably, a three-way connection is set up by the wireless device 100 in accordance with the designated recording policy when a communication with landline device 202 is to be established. The three-way connection connects the wireless device 100, landline device 202 and recording device 106 via the mobile network 104. A controlling server 110 controls the recording policy implemented by the wireless device 100. The controlling server 110 may be a landline server. Alternatively, the controlling server 110 may be wireless. The controlling server 110 is connected to the wireless device 100 via mobile network 104.

Preferably the communications being recorded are voice calls. However, the following disclosure equally applies to data communications such as SMS or PIN messages. Preferably, communications between the wireless device 100 and controlling server 110 are implemented by SMS (short message service) or by using the mobile data network. Suitably, communications between the wireless device 100 and controlling server 110 are only implemented by SMS or by using the mobile data network.

Typically, the connection between the wireless device 100 and the controlling server 110 is set up by the wireless device 100 polling the transport or application layer on the mobile cellular network 104 which in turn polls and connects to the controlling server 110 over the radio transport layer.

As a result of the fact that the wireless device 100 is typically mobile and its location changes, the same recording policy (i.e. recording protocol) is not necessarily appropriate for the wireless device 100 to use at all times. Preferably, the wireless device is able to operate in accordance with a plurality of recording policies. A recording policy may specify any one or a combination of the following criteria:
1. whether recording is to be enabled or disabled;
2. whether communications involving the wireless device 100 are to be enabled or disabled; and
3. which recording device the wireless device is to connect to for recording the communications of the wireless device.

The controlling server 110 determines which recording policy to instruct the wireless device 100 to implement. The controlling server 110 determines this recording policy in accordance with a recording protocol for that wireless device. Suitably, this recording protocol specifies conditions under which each of the plurality of recording policies is to be implemented.

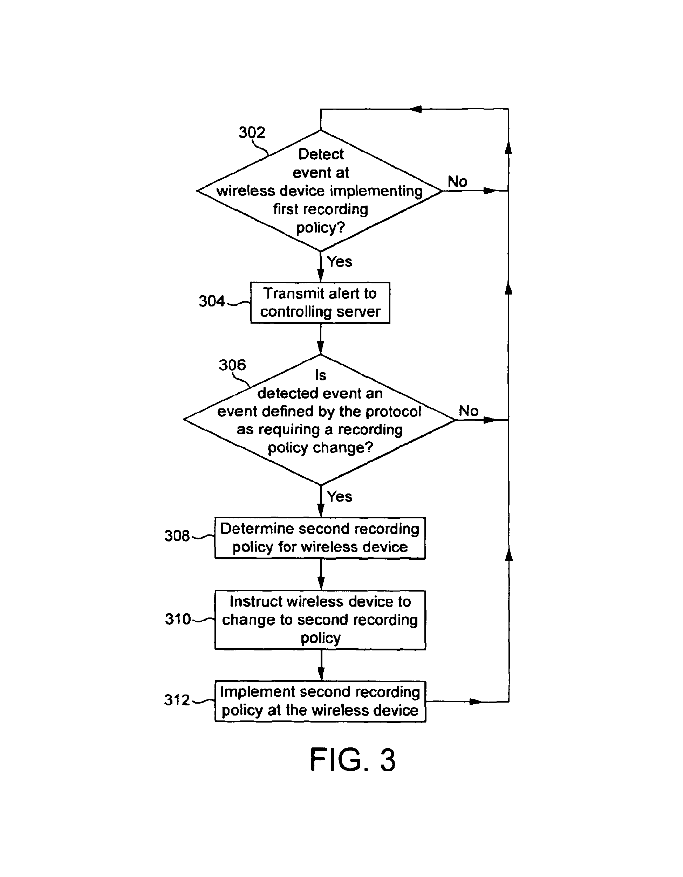

Figure 3 is a flow diagram illustrating an example method of controlling the recording of wireless device 100's communications. Initially, the wireless device is communicating with another device (for example wireless device 102 of figure 1 or landline device 202 of figure 2) and that communication is being recorded by a first recording device 106 according to a first recording policy. The wireless device 100 monitors its recording environment. The wireless device 100 is configured to detect events which the controlling server may respond to by changing the recording policy that the wireless device is implementing. These events indicate a change in the recording environment of the wireless device. Examples of such events are described later. If, at step 302, the wireless device detects an event then, at step 304, the wireless device transmits an alert to the controlling server 110. This alert identifies the detected event. The alert is sent over the radio transport layer to the controlling server 110. Typically, this alert is sent as an SMS (short message service) or wireless data.

The controlling server has a store of events defined by the recording protocol for the wireless device. Entries in the store identify recording policies to be implemented on occurrence of the events. At step 306, the controlling server compares the detected event identified in the alert to the events defined by the recording protocol. This comparison enables the controlling server to determine if a different recording policy should be implemented by the wireless device, and if so which different recording policy (step 308). If the detected event does not match any of the events defined by the recording protocol, then no action is taken by the controlling server to instruct the wireless device to change its current recording policy. If the detected event does match an event defined by the recording protocol, and the recording policy identified by the recording protocol for that event is the same recording policy that the wireless device is currently implementing, then no action is taken by the controlling server to instruct the wireless device to change its current recording policy. If the detected event does match an event defined by the recording protocol, but no change of recording policy is identified by the recording protocol for that event, then no action is taken by the controlling server to instruct the wireless device to change its current recording policy. If the detected event matches an event defined by the recording protocol, and the recording policy identified by the recording protocol for that event is different to the recording policy that the wireless device is currently implementing, then the controlling server instructs the wireless device to change to the recording policy identified by the recording protocol to match the detected event. In step 310 this is referred to as the second recording policy. At step 312, the wireless device modifies its operation so as to implement the second recording policy as instructed by the controlling server. Suitably, the wireless device disables its implementation of the first recording policy and enables implementation of the second recording policy. Suitably, the wireless device transmits a message back to the controlling server acknowledging that it has successfully implemented the second recording policy. Suitably, if the wireless device is unable to successfully implement the second recording policy, then it transmits a message back to the controlling server requesting a retransmission of the instruction of step 310. Consequently, the controlling server retransmits the instruction of step 310. The wireless device then again attempts to modify its operation so as to implement the second recording policy.

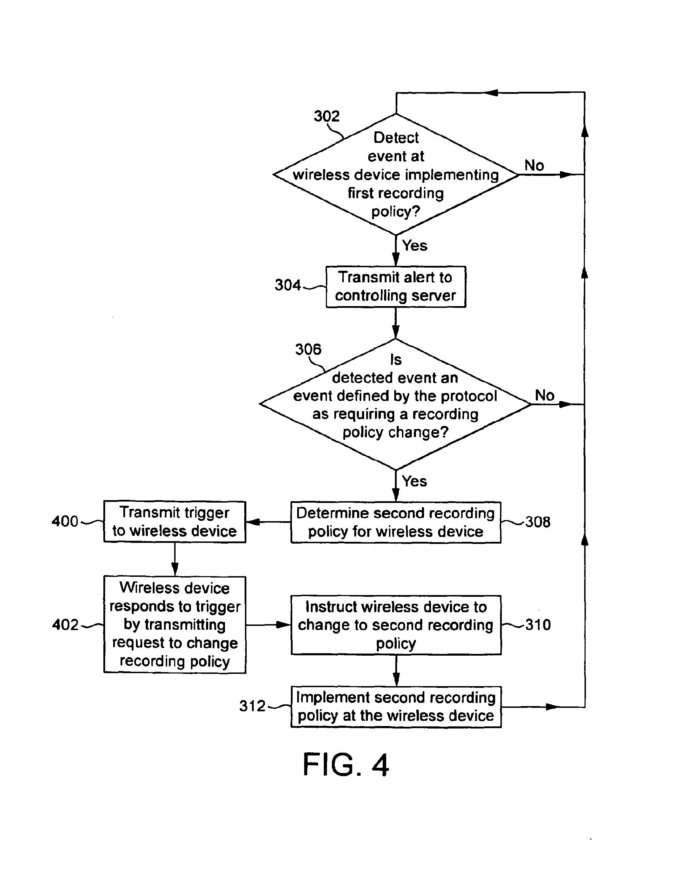

Figure 4 is a flow diagram illustrating a further example method of controlling the recording of wireless device 100's communications. The method of figure 4 is as described for figure 3 with the addition of two steps between steps 308 and 310 of figure 3. Following step 308, in which the controlling server has determined the second recording policy for the wireless device to change to, at step 400 the controlling server transmits a trigger to the wireless device. This trigger is a message which causes the wireless device to respond, in step 402, by transmitting a request back to the controlling server for a change in recording policy. The controlling server responds to this request at step 310 by instructing the wireless device to change to the second recording policy. The instruction at step 310 to change to the second recording policy includes the new settings that the wireless device employs in order to implement the second recording policy.

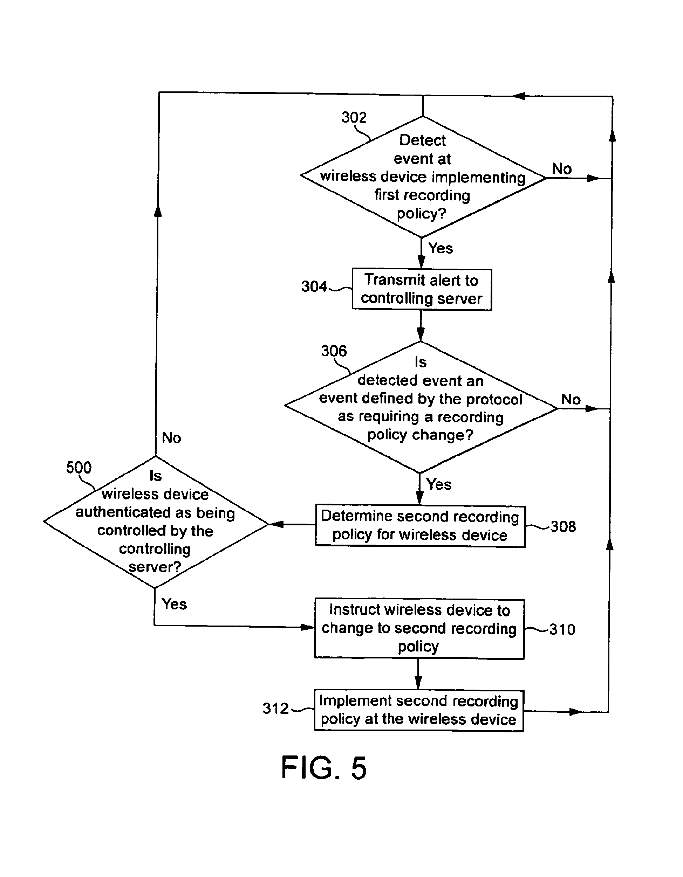

Figure 5 is a flow diagram illustrating a further example method of controlling the recording of wireless device 100's communications. The method of figure 5 is as described for figure 3 with the addition of a step between steps 308 and 310 of figure 3. Following step 308, in which the controlling server has determined the second recording policy for the wireless device to change to, at step 500 a determination is made as to whether the wireless device is authenticated as being controlled by the controlling server. This authentication verification may occur at any point in the method. For example, the authentication may occur prior to the wireless device transmitting the alert to the controlling server in step 304. If the authentication is successful, the method continues to step 310 at which the controlling server instructs the wireless device to change to the second recording policy. If the authentication is not successful, then the controlling server takes no action to instruct the wireless device to change recording policy. Preferably, the wireless device is configured such that it only implements recording policies instructed to it by a controlling server that it has performed a successful authentication process with. The authentication process may involve the exchange of a security key from the controlling server to the wireless device.

In a further example method, the method as described in relation to figure 3 is augmented by both the additional authentication step of figure 5 and the additional messaging steps of figure 4.

As described above, the wireless device 100 is configured to monitor its environment. The wireless device 100 detects events which may cause the controlling server to change the current recording policy of the wireless device. Events that the wireless device is configured to detect may include any one or a combination of the following:
1. the wireless network 104 is experiencing service disruption and fails to connect the wireless device to the recording device;
2. the connection to the recording device is unavailable, i.e. it cannot be initially established;
3. the connection to the recording device fails during the call;
4. the SIM (subscriber identification module) card of the wireless device has been removed and replaced;
5. the mobile network to which the wireless device is connected has changed, for example the wireless device's status has changed from home to roaming or roaming to home;
6. the software application on the wireless device controlling the connection to the recording device is faulty;
7. the time of day has changed from a first time period to a second time period;
8. the day of week has changed from a first day to a second day.

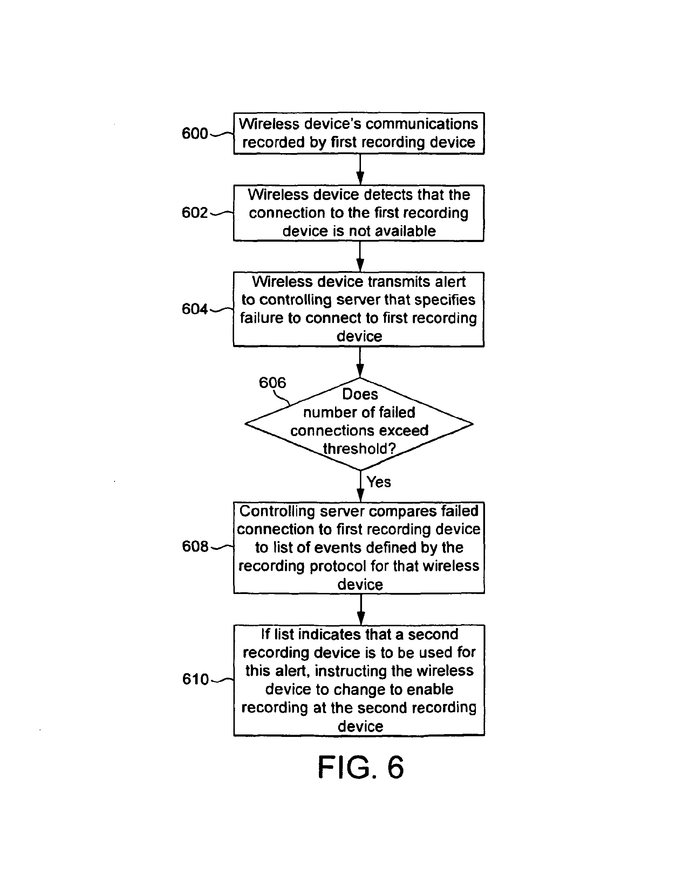

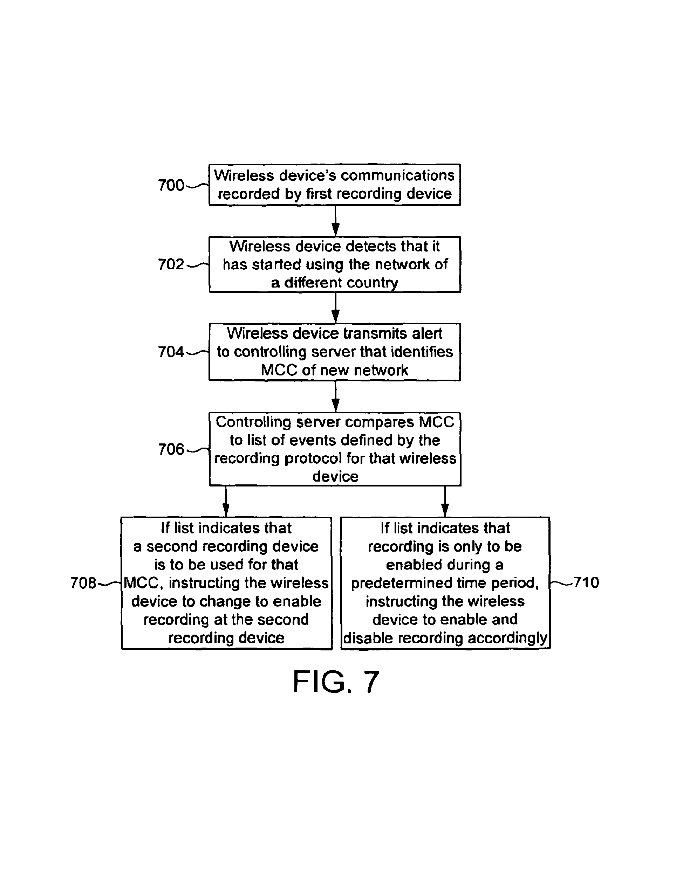

Figures 6 and 7 illustrate example implementations of the methods described with respect to figures 3, 4 and 5.

In the example implementation of figure 6, the wireless device detects that it is unable to connect to the first recording device. Initially, at step 600 the wireless device is communicating, and its communication is being recorded by the first recording device according to the first recording policy. At step 602, the wireless device detects that the connection to the first recording device is not available. For example, the connection to the PSTN line that enables connection to the first recording device has failed. At step 604 the wireless device transmits an alert to the controlling server identifying the failed connection to the first recording device. The alert may, for example, specify that the recording device's PSTN number is not available.

The controlling server may log the alert by placing it in a database. At step 606, the controlling server determines the number of failed connections between the wireless device and the first recording device. Preferably, the controlling server determines the number of consecutive failed connections between the wireless device and the first recording device. The controlling server determines if this number of failed connections exceeds a threshold value. If the number of failed connections does not exceed the threshold value then the controlling server does not instruct the wireless device to change its recording policy. If the number of failed connections does exceed the threshold value then the method progresses to step 608.

At step 608, the controlling server compares the detected event (i.e. failed connection to the first recording device) to the events defined by the recording protocol for that wireless device. For example, the controlling server may implement a table which includes a list of wireless device identifiers, events, and actions to take at each wireless device as a result of those events. The wireless device identifier is typically a PIN (personal identification number) or IMEI (international mobile equipment identity) number. If the detected event matches an event in the table, and there is an action to take associated with that event, then the controlling server determines that the wireless device should take that action. For example, if the detected event is a failed connection to the first recording device, the action is suitably to initiate a connection to a second recording device. Suitably, the table specifies the identity of the second recording device. For example, the table may provide the PSTN number of the second recording device. Consequently, at step 610 the controlling server instructs the wireless device to implement a second recording policy in which the wireless device connects to the second recording device. Suitably, the wireless device disables attempts to connect to the first recording device and enables a connection attempt to the second recording device. The second recording device subsequently records communications from the wireless device. If the table does not indicate a second recording device to switch to, then the controlling server may instruct the wireless device to disable recording and allow the call to continue unrecorded. Alternatively, if the table does not indicate a second recording device to switch to, then the controlling server may instruct the wireless device to disable its communications (for example calls to wireless device 102 and landline device 202) until the first recording device is available again. As described with respect to figure 3, the wireless device then implements the change in recording policy instructed by the controlling server.

In the example implementation of figure 7, the wireless device has changed location from one jurisdiction to another. For example, the wireless device may have moved from one country to another. Many jurisdictions have different legal requirements regarding the manner in which recording can take place. For example, there are laws in Switzerland directed at the recording of landline phone calls. These laws could equally apply to a mobile phone user, especially when roaming. These laws require that call recordings be created on a recording device and stored within Switzerland. Some US states have laws that are directed at phone recording that require all parties on a phone call to be aware that recording is taking place. The requirements of the different jurisdictions are stored by the controlling server, and on receiving an alert from the wireless device indicating that the wireless device has changed jurisdictions, the controlling server determines the appropriate recording policy for that jurisdiction and instructs the wireless device to use it.

Initially, at step 700 the wireless device is communicating, and its communication is being recorded by the first recording device according to the first recording policy. At step 702, the wireless device detects that it has started using the network of a different country. At step 704 the wireless device transmits an alert to the controlling server identifying the MCC (mobile country code) of the network that the wireless device is now using.

The controlling server may log the alert by placing it in a database. At step 706, the controlling server compares the detected event (i.e. MCC of the new network) to the events defined by the recording protocol for that wireless device. For example, the controlling server may implement a table which includes a list of wireless device identifiers, events, and actions to take at each wireless device as a result of those events. The wireless device identifier is typically a PIN (personal identification number) or IMEI (international mobile equipment identity) number. If the detected event matches an event in the table, and there is an action to take associated with that event, then the controlling server determines that the wireless device should take that action.

For example, if the detected event is the MCC of a network in Switzerland, the action is suitably to initiate a connection to a second recording device located in Switzerland. Suitably, the table specifies the identity of the second recording device. For example, the table may provide the PSTN number of the second recording device. Consequently, at step 708 the controlling server instructs the wireless device to implement a second recording policy in which the wireless device connects to the second recording device. Suitably, the wireless device disables its connection to the first recording device and enables a connection to the second recording device. The second recording device subsequently records communications from the wireless device. If the table does not indicate a second recording device to switch to, then the controlling server may instruct the wireless device to disable recording and allow the call to continue unrecorded. Alternatively, if the table does not indicate a second recording device to switch to, then the controlling server may take no action. Consequently, the wireless device continues operating in accordance with the first recording policy in which the first recording device records the wireless device's communications. Alternatively, if the table does not indicate a second recording device to switch to, then the controlling server may instruct the wireless device to disable its communications (for example calls to wireless device 102 and landline device 202) until the wireless device changes its location to a country where the first recording device may legally be used to record the wireless device's communications. As described with respect to figure 3, the wireless device then implements the change in recording policy instructed by the controlling server.

If the detected event is the MCC of a network in the US, then the action is suitably to warn the participants of the call that they are being recorded. For example, audible beeps may be played to indicate that the call is being recorded. Consequently, the controlling server instructs the wireless device to change to a second recording policy in which the participants of the call are warned that they are being recorded.

If the detected event is the MCC of a network, and the table indicates that that country only allows recording to be enabled during predetermined times of day or days of week, then at step 710 the controlling server instructs the wireless device to implement a second recording policy in which recording is enabled and disabled according to the second recording policy. This may be implemented, for example, by the controlling server transmitting a first instruction to the wireless device at a first predetermined time. The wireless device responds to this first instruction by disabling recording of its communications by the first recording device. In practice, the first instruction sent to the wireless device by the controlling server may specify a blank recording device PSTN number. The controlling server then transmits a second instruction to the wireless device at a second predetermined time. The wireless device responds to this second instruction by enabling recording of its communications by the first recording device. In practice, the second instruction sent to the wireless device by the controlling server may specify the PSTN number of the first recording device. The first and second predetermined times are specified by the recording protocol. For example the country may only allow calls to be recorded during office hours. In this case, the first predetermined time may be 5pm and the second predetermined time may be 9am. Similarly, call recording may be disabled at weekends.

In another example implementation of the methods described with respect to figures 3, 4 and 5, the wireless device detects that the SIM card of the wireless device has been removed and replaced with another SIM card. Alternatively, the wireless device detects that the caller ID (identification) has been changed. The wireless device transmits an alert to the controlling server identifying the change in identity. The controlling server responds by flagging the user and placing the user on a list for action by an administrator.

In another example implementation, the wireless device detects that it is having support problems such as mobile network failures or incorrect authentication. The controlling server responds by flagging the user and placing the user on a list for action by an administrator.

Preferably, the wireless device is configured to terminate its communications with other devices if it detects that its connection to the recording device has failed. For example, if the wireless device 100 of figure 1 is communicating with wireless device 102 of figure 1 according to a first recording policy in which the communication is being recorded by recording device 106, and the connection between wireless device 100 and recording device 106 fails, then wireless device 100 terminates its communication with wireless device 102. Preferably, the wireless device 100 terminates its communications with other devices if its connection to the recording device fails mid-communication, is initially unavailable, or is placed on HOLD mid-communication. This combats attempts by the user to bypass the connection to the recording device in order to prevent a communication being recorded.

Suitably, the controlling server 110 comprises a store. The controlling server is configured to store data in this store which identifies the wireless device that is being recorded. Suitably, this store also stores data which identifies the recording device 106 that is recording the communications of the wireless device 100. Suitably, it stores the PSTN number of the recording device. Optionally, this store includes one or more phone numbers of wireless devices that are to be treated as exempt from call recording when connected.

A further function of the controlling server is to collect a call data record after each recorded call by a wireless device. The data stored includes one or a combination of the following: the type of call (incoming, outgoing, to-the-recording-device); the time, date and duration of the call; the wireless device identification (PIN or IMEI); the name of the mobile network used; and the mobile network's identification number. The alerts sent by the wireless device to the controlling server are also stored. Data on call statistics and user call volumes are made available for the user and/or data managers.

On some wireless devices, a user is able to suppress their caller ID. The controlling server stores a list of PIN or IMEI numbers associated with the wireless devices. The controlling server also stores a list of the caller IDs that have been registered as valid for each wireless device. The store maps the PIN/IMEI number of a wireless device to the caller ID of the wireless device. If the caller ID of the wireless device that has been recorded is withheld by the user, then the controlling server determines the caller ID by comparing the wireless device's PIN/IMEI number to the store. This caller ID is stored as part of the call data record.

Suitably, the wireless device is a mobile phone. For example, the mobile phone may be a BlackBerry.

As well as the recording of direct calls between a landline device (202) or wireless device (102) and a recorded wireless device (100), the method described herein also applies to unified communications systems. Suitably, the wireless device is the device which connects calls in a unified communications system. Such calls are routed via a telephony infrastructure that includes a call recorder and a PBX. Where such calls are routed between a recorded wireless device (100) and other landline or mobile cellular devices with the PBX as the central hub, the method and systems described herein will not be in use. Instead, the communications are recorded at the call recorder associated with the PBX. However, in circumstances where the rules and protocols that govern mobile networks and unified communications systems permit a call to go directly to or from the SIM card in the recorded wireless device (100), then it is possible to bypass the recorded PBX. In such scenarios, the system and method of recording calls described herein can be used to enable all communications to and from the SIM card of the wireless device (100) to be connected to a call recording device (106) as described herein. This connection to the call recording device (106) is independent of the PBX. This ensures that whilst all calls that are connected via the PBX are recorded as in known unified communications systems, calls that bypass the PBX are also recorded as described herein. Communications from the wireless device (100) may bypass the PBX if policies set at PBX or network level to prevent calls to and from the SIM card fail to be properly implemented or enforced. Communications from the wireless device (100) may bypass the PBX if the unified communications system is deliberately set up to allow calls to and from the SIM card of the wireless device (100) for situations such as disaster recovery and adherence to local laws when roaming.

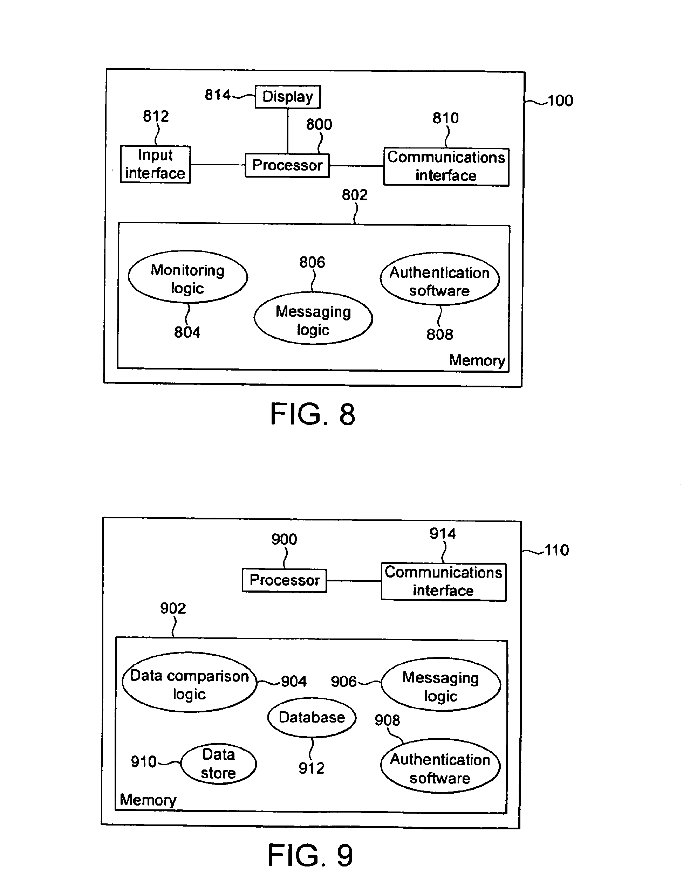

Figure 8 illustrates components of exemplary wireless device 100 in which the method steps described herein with respect to wireless device 100 can be implemented. The wireless device 100 comprises processor 800 for processing computer executable instructions. The processor is configured to control the operation of the wireless device in order to perform the method steps of the wireless device. The computer executable instructions can be provided using any computer readable media such as memory 802. Methods may be performed by software in machine readable form on a tangible storage medium. Software that can be provided on the memory of the wireless device includes monitoring logic 804 (for implementing environment monitoring and event detection), messaging logic 806 (for preparing and transmitting alerts, acknowledgments, policy requests, and authentication messages) and authentication software 808 (for implementing authentication processes). The wireless device comprises communications interface 810 for communicating with mobile network 104. The wireless device optionally further comprises user input interface 812 suitable for enabling a user to make and receive calls. The wireless device optionally further comprises display 814 suitable for communicating information visually to a user.

Figure 9 illustrates components of exemplary controlling server 110 in which the method steps described herein with respect to controlling server 110 can be implemented. The controlling server 110 comprises processor 900 for processing computer executable instructions. The processor is configured to control the operation of the controlling server 110 in order to perform the method steps of the controlling server 110. The computer executable instructions can be provided using any computer readable media such as memory 902. Methods may be performed by software in machine readable form on a tangible storage medium. Software that can be provided on the memory of the controlling server includes data comparison logic 904 (for implementing event comparison and policy determination), messaging logic 906 (for preparing and transmitting instructions and authentication messages), authentication software 908 (for implementing authentication processes), data store 910 (for storing data identifying the wireless devices and recording devices), and database 912 (for storing recording policies for each wireless device). The controlling server comprises communications interface 914 for communicating with mobile network 104.

The applicant draws attention to the fact that the present invention may include any feature or combination of features disclosed herein either implicitly or explicitly or any generalisation thereof, without limitation to the scope of any of the present claims. In view of the foregoing description it will be evident to a person skilled in the art that various modifications may be made within the scope of the invention.

## Claims

1. A method of controlling the recording of a wireless device's (100) communications, the method comprising:
recording the wireless device's (100) communications according to a first recording policy;
at the wireless device (100), detecting an event indicating a change in the recording environment of the wireless device (100);
transmitting an alert from the wireless device (100) to a controlling server (110) identifying the event;
at the controlling server (110), comparing the identified event to events defined by a recording protocol, and based on the comparison determining to instruct the wireless device (100) to implement a second recording policy;
transmitting an instruction from the controlling server (110) to the wireless device (100) to implement the second recording policy; and
at the wireless device (100), modifying the operation of the wireless device (100) so as to implement the second recording policy.

2. A method as claimed in claim 1, wherein the detected event is at least one of: a change in location of the wireless device (100) from a first jurisdiction to a second jurisdiction; a failure in the connection between the wireless device (100) and a recording device (106); and that the subscriber identification module of the wireless device (100) has been replaced.

3. A method as claimed in claim 1 or 2, wherein the second recording policy requires the wireless device (100) to at least one of: disconnect from a recording device (106) during a predetermined time period; and to connect to an alternative recording device so as to allow the alternative recording device to record the wireless device's (100) communications.

4. A wireless device (100) operable in accordance with first and second recording policies in a system comprising the wireless device (100), a recording device (106) operable to record the wireless device's (100) communications, and a controlling server (110) operable to control the recording of the wireless device's (100) communications in accordance with a recording protocol, the wireless device (100) configured to:
whilst implementing the first recording policy, detect an event indicating a change in the recording environment of the wireless device (100);
transmit an alert to the controlling server (110) identifying the event;
receive an instruction from the controlling server (110) instructing the wireless device (100) to implement the second recording policy, the instruction based on a comparison of the identified event and events defined by the recording protocol; and
modify the operation of the wireless device (100) so as to implement the second recording policy.

5. A wireless device (100) as claimed in claim 4, wherein the wireless device (100) is required by the first recording policy to connect to the recording device (106) so as to allow the recording device (106) to record the wireless device's (100) communications, and wherein the wireless device (100) is required by the second recording policy to disconnect from the recording device (106).

6. A wireless device (100) as claimed in claim 4, wherein the wireless device (100) is required by the second recording policy to at least one of: disconnect from the recording device (106) during a predetermined time period; and connect to an alternative recording device so as to allow the alternative recording device to record the wireless device's (100) communications.

7. A wireless device (100) as claimed in claim 5, wherein the wireless device (100) is further required by the second recording policy to connect to an alternative recording device so as to allow the alternative recording device to record the wireless device's (100) communications.

8. A wireless device (100) as claimed in any of claims 4 to 7, wherein the system is a unified communications system in which communications are routed through an exchange server at which the communications are recorded, and wherein the wireless device (100) is configured such that the wireless device's (100) communications bypass the exchange server.

9. A controlling server (110) operable to control the recording of a wireless device's (100) communications in accordance with a recording protocol in a system comprising the wireless device (100), a recording device (106) operable to record the wireless device's (100) communications, and the controlling server (110), the controlling server (110) configured to:
receive an alert from the wireless device (100) identifying that the wireless device (100) has detected an event indicating a change in the recording environment of the wireless device (100) whilst the wireless device (100) is implementing a first recording policy;
compare the identified event to events defined by the recording protocol, and based on the comparison determine to instruct the wireless device (100) to implement a second recording policy; and
transmit an instruction to the wireless device (100) to implement the second recording policy.

10. A controlling server (110) as claimed in claim 9, further configured to only determine to instruct the wireless device (100) to implement the second recording policy if the number of alerts transmitted from the wireless device (100) to the controlling server (110) identifying failed connections to the recording device (106) exceeds a threshold number.

11. A controlling server (110) as claimed in claim 9, wherein the controlling server (110) is further configured to store at least one identification number, and wherein the detected event is that the wireless device (100) has connected to a device having the identification number.

12. A controlling server (110) as claimed in any of claims 9 to 11, further configured to, prior to transmitting an instruction from the controlling server (110) to the wireless device (100), implement the second recording policy, authenticate the wireless device (100) as being controlled by the controlling server (110), and only if that authentication is successful perform the transmitting step.

13. A wireless device (100) as claimed in any of claims 4 to 8 or a controlling server (110) as claimed in any of claims 9 to 12, wherein the detected event is at least one of: a change in location of the wireless device (100) from a first jurisdiction to a second jurisdiction; a failure in the connection between the wireless device (100) and the recording device (106); and that the subscriber identification module of the wireless device (100) has been replaced.

14. A system comprising:
a wireless device (100) operable in accordance with first and second recording policies, and configured to detect an event indicating a change in the recording environment of the wireless device (100);
a recording device (106) operable to record the wireless device's (100) communications; and
a controlling server (110) operable to control the recording of the wireless device's (100) communications in accordance with a recording protocol, wherein the wireless device (100) is configured, whilst implementing the first recording policy, to detect the event and to transmit an alert to the controlling server (110) identifying the event, and
wherein the controlling server (110) is configured to compare the identified event to events defined by the recording protocol, and based on the comparison, to instruct the wireless device (100) to implement the second recording policy, and is further configured to transmit an instruction to the wireless device (100) to implement the second recording policy; and
wherein the wireless device (100) is further configured to modify the operation of the wireless device (100) so as to implement the second recording policy.

15. Computer readable media which when executed on a processor of the wireless device (100) is arranged to perform the event detecting, alert transmitting and operation modifying steps of the method of claim 1.

## Patentansprüche

1. Verfahren zur Steuerung der Aufzeichnung der Kommunikationen eines drahtlosen Geräts (100), wobei das Verfahren umfasst:
Aufzeichnen der Kommunikationen des drahtlosen Geräts (100) gemäß einer ersten Aufzeichnungspolitik;
am drahtlosen Gerät (100), detektieren eines Ereignisses, das eine Änderung in der Aufzeichnungsumgebung des drahtlosen Geräts (100) anzeigt;
Senden eines Alarms vom drahtlosen Gerät (100) zu einem Steuerungsserver (110), der das Ereignis identifiziert;
am Steuerungsserver (110), Vergleichen des identifizierten Ereignisses mit Ereignissen, die von einem Aufzeichnungsprotokoll definiert sind und auf dem Vergleich beruhend zu bestimmen das drahtlose Gerät (100) zu instruieren eine zweite Aufzeichnungspolitik zu implementieren;
Senden eines Befehls vom Steuerungsserver (110) an das drahtlose Gerät (100), um die zweite Aufzeichnungspolitik zu implementieren; und
am drahtlosen Gerät (100), Modifizieren des Betriebs des drahtlosen Geräts (100), um die zweite Aufzeichnungspolitik zu implementieren.

2. Verfahren wie in Anspruch 1 beansprucht, wobei das detektierte Ereignis wenigstens eins von Folgenden ist: eine Ortsveränderung des drahtlosen Geräts (100) aus einer ersten Jurisdiktion in eine zweite Jurisdiktion; ein Versagen in der Verbindung zwischen dem drahtlosen Gerät (100) und einem Aufzeichnungsgerät (106); und, dass das Teilnehmer-Identifizierungsmodul des drahtlosen Geräts (100) ersetzt worden ist.

3. Verfahren wie in Anspruch 1 oder 2 beansprucht, wobei die zweite Aufzeichnungspolitik vom drahtlosen Gerät (100) wenigstens eins von Folgenden verlangt: Trennen von einem Aufzeichnungsgerät (106) während eines vorbestimmten Zeitraums; und anschließen an ein alternatives Aufzeichnungsgerät, um dem alternativen Aufzeichnungsgerät zu erlauben, die Kommunikationen des drahtlosen Geräts (100) aufzuzeichnen.

4. Drahtloses Gerät (100), das in Übereinstimmung mit ersten und zweiten Aufzeichnungspolitiken in einem System betreibbar ist, welches das drahtlose Gerät (100), ein Aufzeichnungsgerät (106), das betreibbar ist, die Kommunikationen des drahtlosen Geräts (100) aufzuzeichnen und einen Steuerungsserver (110) umfasst, der betreibbar ist, die Aufzeichnung der Kommunikationen des Geräts (100) in Übereinstimmung mit einem Aufzeichnungsprotokoll zu steuern, wobei das drahtlose Gerät (100) konfiguriert ist, Folgendes auszuführen:
während der Implementierung der ersten Aufzeichnungspolitik, detektieren eines Ereignisses, das eine Änderung in der Aufzeichnungsumgebung des drahtlosen Geräts (100) anzeigt;
Senden eines Alarms an den Steuerungsserver (110), der das Ereignis identifiziert;
Empfangen eines Befehls vom Steuerungsserver (110), der das drahtlose Gerät (100) instruiert, die zweite Aufzeichnungspolitik zu implementieren, wobei der Befehl auf einem Vergleich des identifizierten Ereignisses und Ereignissen beruht, die vom Aufzeichnungsprotokoll definiert sind; und
Modifizieren des Betriebs des drahtlosen Geräts (100), um die zweite Aufzeichnungspolitik zu implementieren.

5. Drahtloses Gerät (100) wie in Anspruch 4 beansprucht, wobei die erste Aufzeichnungspolitik erfordert, dass das drahtlose Gerät (100) an das Aufzeichnungsgerät (106) angeschlossen wird, um dem Aufzeichnungsgerät (106) zu ermöglichen, Kommunikationen des drahtlosen Geräts (100) aufzuzeichnen, und wobei die zweite Aufzeichnungspolitik erfordert, dass das drahtlose Gerät (100) vom Aufzeichnungsgerät (106) getrennt wird.

6. Drahtloses Gerät (100) wie in Anspruch 4 beansprucht, wobei die zweite Aufzeichnungspolitik vom drahtlosen Gerät (100) wenigstens eins von Folgenden verlangt: Trennen vom Aufzeichnungsgerät (106) während eines vorbestimmten Zeitraums; und anschließen an ein alternatives Aufzeichnungsgerät, um dem alternativen Aufzeichnungsgerät zu erlauben, die Kommunikationen des drahtlosen Geräts (100) aufzuzeichnen.

7. Drahtloses Gerät (100) wie in Anspruch 5 beansprucht, wobei die zweite Aufzeichnungspolitik erfordert, dass das drahtlose Gerät (100) ferner an ein alternatives Aufzeichnungsgerät angeschlossen wird, um dem alternativen Aufzeichnungsgerät zu erlauben, die Kommunikationen des drahtlosen Geräts (100) aufzuzeichnen.

8. Drahtloses Gerät (100) wie in irgendeinem der Ansprüche 4 bis 7 beansprucht, wobei das System ein einheitliches Kommunikationssystem ist, in dem Kommunikationen durch einen Vermittlungsserver geleitet werden, an dem die Kommunikationen aufgezeichnet werden, und wobei das drahtlose Gerät (100) derart konfiguriert ist, dass die Kommunikationen des drahtlosen Geräts (100) den Vermittlungsserver umgehen.

9. Steuerungsserver (110), der betreibbar ist, die Aufzeichnung der Kommunikationen eines drahtlosen Geräts (100) in Übereinstimmung mit einem Aufzeichnungsprotokoll in einem System zu steuern, welches das drahtlose Gerät (100), ein Aufzeichnungsgerät (106), das betreibbar ist, die Kommunikationen des drahtlosen Geräts (100) aufzuzeichnen und einen Steuerungsserver (110) umfasst, wobei der Steuerungsserver (110) konfiguriert ist, Folgendes auszuführen:
Empfangen eines Alarms vom drahtlosen Gerät (100) der identifiziert, dass das drahtlose Gerät (100) ein Ereignis detektiert hat, das eine Änderung in der Aufzeichnungsumgebung des drahtlosen Geräts (100) anzeigt, während das drahtlose Gerät (100) eine erste Aufzeichnungspolitik implementiert;
Vergleichen des identifizierten Ereignisses mit Ereignissen, die vom Aufzeichnungsprotokoll definiert sind und auf dem Vergleich beruhend zu bestimmen, das drahtlose Gerät (100) zu instruieren eine zweite Aufzeichnungspolitik zu implementieren; und
Senden eines Befehls an das drahtlose Gerät (100), um die zweite Aufzeichnungspolitik zu implementieren.

10. Steuerungsserver (110) wie in Anspruch 9 beansprucht, der ferner konfiguriert ist, nur zu bestimmen das drahtlose Gerät (100) zu instruieren die zweite Aufzeichnungspolitik zu implementieren, wenn die Anzahl der vom drahtlosen Gerät (100) an den Steuerungsserver (110) gesendeten Alarme, die erfolglose Verbindungen zum Aufzeichnungsgerät (106) identifizieren, eine Schwellenzahl überschreitet.

11. Steuerungsserver (110) wie in Anspruch 9 beansprucht, wobei der Steuerungsserver (110) ferner konfiguriert ist, wenigstens eine Identifikationsnummer zu speichern, und wobei das detektierte Ereignis ist, dass sich das drahtlose Gerät (100) mit einem Gerät verbunden hat, das die Identifikationsnummer aufweist.

12. Steuerungsserver (110) wie in irgendeinem der Ansprüche 9 bis 11 beansprucht, der ferner konfiguriert ist, vor dem Senden eines Befehls vom Steuerungsserver (110) an das drahtlose Gerät (100), die zweite Aufzeichnungspolitik zu implementieren, das drahtlose Gerät (100) als vom Steuerungsserver (110) gesteuert zu authentisieren, und nur, wenn jene Authentifizierung erfolgreich ist, den Sendeschritt auszuführen.

13. Drahtloses Gerät (100) wie in irgendeinem der Ansprüche 4 bis 8 beansprucht oder ein Steuerungsserver (110) wie in irgendeinem der Ansprüche 9 bis 12 beansprucht, wobei das detektierte Ereignis wenigstens eins von Folgenden ist: eine Ortsveränderung des drahtlosen Geräts (100) aus einer ersten Jurisdiktion in eine zweite Jurisdiktion; ein Versagen in der Verbindung zwischen dem drahtlosen Gerät (100) und einem Aufzeichnungsgerät (106); und, dass das Teilnehmer-Identifizierungsmodul des drahtlosen Geräts (100) ersetzt worden ist.

14. Ein System bestehend aus:
einem drahtlosen Gerät (100), das in Übereinstimmung mit ersten und zweiten Aufzeichnungspolitiken betreibbar ist, und konfiguriert ist, ein Ereignis zu detektieren, das eine Änderung in der Aufzeichnungsumgebung des drahtlosen Geräts (100) anzeigt;
einem Aufzeichnungsgerät (106), das betreibbar ist, die Kommunikationen des drahtlosen Geräts (100) aufzuzeichnen; und
einem Steuerungsserver (110), der betreibbar ist, die Aufzeichnung der Kommunikationen des drahtlosen Geräts (100) in Übereinstimmung mit einem Aufzeichnungsprotokoll zu steuern, wobei das drahtlose Gerät (100) konfiguriert ist, während der Implementierung der ersten Aufzeichnungspolitik, das Ereignis zu detektieren und einen Alarm an den Steuerungsserver (110) zu senden, der das Ereignis identifiziert, und
wobei der Steuerungsserver (110) konfiguriert ist, das identifizierte Ereignis mit Ereignissen zu vergleichen, die vom Aufzeichnungsprotokoll definiert wurden, und beruhend auf dem Vergleich, das drahtlose Gerät (100) zu instruieren die zweite Aufzeichnungspolitik zu implementieren, und ferner konfiguriert ist, einen Befehl an das drahtlose Gerät (100) zu senden die zweite Aufzeichnungspolitik zu implementieren; und
wobei das drahtlose Gerät (100) ferner konfiguriert ist, den Betrieb des drahtlosen Geräts (100) zu modifizieren, um die zweite Aufzeichnungspolitik zu implementieren.

15. Computerlesbare Medien, die, wenn auf einem Prozessor des drahtlosen Geräts (100) ausgeführt, eingerichtet sind, das Detektieren des Ereignisses, das Senden des Alarms und den Betrieb modifizierende Schritte des Verfahrens nach Anspruch 1 auszuführen.

## Revendications

1. Procédé servant à contrôler l'enregistrement des communications d'un dispositif sans fil (100), le procédé comprenant les opérations consistant à :
enregistrer les communications d'un dispositif sans fil (100) conformément à une première politique d'enregistrement ;
au niveau du dispositif sans fil (100), détecter un événement qui indique un changement dans l'environnement d'enregistrement du dispositif sans fil (100) ;
transmettre une alerte, depuis le dispositif sans fil (100) vers un serveur de contrôle (110), identifiant l'événement ;
au niveau du serveur de contrôle (110), comparer l'événement identifié à des événements définis par un protocole d'enregistrement, et sur la base de la comparaison, déterminer s'il s'agit d'ordonner au dispositif sans fil (100) de mettre en oeuvre une deuxième politique d'enregistrement ;
transmettre une instruction depuis le serveur de contrôle (110) vers le dispositif sans fil (100) pour mettre en oeuvre la deuxième politique d'enregistrement ; et
au niveau du dispositif sans fil (100), modifier le fonctionnement du dispositif sans fil (100) de sorte à mettre en oeuvre la deuxième politique d'enregistrement.

2. Procédé selon la revendication 1, l'événement détecté étant au moins l'un des suivants, à savoir : un changement de localisation du dispositif sans fil (100) depuis une première juridiction vers une deuxième juridiction ; une défaillance dans la connexion entre le dispositif sans fil (100) et un dispositif d'enregistrement (106) ; et le fait que le module d'identification de l'abonné du dispositif sans fil (100) a été remplacé.

3. Procédé selon la revendication 1 ou 2, la deuxième politique d'enregistrement exigeant que le dispositif sans fil (100) effectue au moins l'une des opérations consistant à : assurer la déconnexion au niveau d'un dispositif d'enregistrement (106) durant un intervalle de temps prédéterminé ; et assurer la connexion vers un dispositif d'enregistrement de remplacement de sorte à permettre au dispositif d'enregistrement de remplacement d'enregistrer les communications du dispositif sans fil (100).

4. Dispositif sans fil (100) exploitable conformément à une première et une deuxième politiques d'enregistrement dans un système comportant le dispositif sans fil (100), un dispositif d'enregistrement (106) exploitable de façon à enregistrer les communications du dispositif sans fil (100), et un serveur de contrôle (110) exploitable de façon à contrôler l'enregistrement des communications du dispositif sans fil (100) conformément à un protocole d'enregistrement, le dispositif sans fil (100) étant configuré de façon à :
pendant la mise en oeuvre de la première politique d'enregistrement, détecter un événement indiquant un changement dans l'environnement d'enregistrement du dispositif sans fil (100) ;
transmettre une alerte au serveur de contrôle (110) identifiant l'alerte ;
recevoir une instruction, en provenance du serveur de contrôle (110), ordonnant au dispositif sans fil (100) de mettre en oeuvre la deuxième politique d'enregistrement, l'instruction étant basée sur une comparaison entre l'événement identifié et des événements définis par le protocole d'enregistrement ; et
modifier le fonctionnement du dispositif sans fil (100) de sorte à mettre en oeuvre la deuxième politique d'enregistrement.

5. Dispositif sans fil (100) selon la revendication 4, la première politique d'enregistrement obligeant le dispositif sans fil (100) à se connecter au dispositif d'enregistrement (106) de sorte à permettre au dispositif d'enregistrement (106) d'enregistrer les communications du dispositif sans fil (100), et cas dans lequel la deuxième politique d'enregistrement oblige le dispositif sans fil (100) à se déconnecter du dispositif d'enregistrement (106).

6. Dispositif sans fil (100) selon la revendication 4, la deuxième politique d'enregistrement obligeant le dispositif sans fil (100) à effectuer au moins l'une des opérations consistant à : assurer la déconnexion au niveau du dispositif d'enregistrement (106) durant un intervalle de temps prédéterminé ; et assurer la connexion vers un dispositif d'enregistrement de remplacement de sorte à permettre au dispositif d'enregistrement de remplacement d'enregistrer les communications du dispositif sans fil (100).

7. Dispositif sans fil (100) selon la revendication 5, la deuxième politique d'enregistrement obligeant en outre le dispositif sans fil (100) à se connecter à un dispositif d'enregistrement de remplacement de sorte à permettre au dispositif d'enregistrement de remplacement d'enregistrer les communications du dispositif sans fil (100).

8. Dispositif sans fil (100) selon l'une quelconque des revendications 4 à 7, le système étant un système de communications unifié dans lequel des communications sont acheminées par l'intermédiaire d'un serveur d'échange au niveau duquel les communications sont enregistrées, et cas dans lequel le dispositif sans fil (100) est configuré de telle sorte que les communications du dispositif sans fil (100) contournent le serveur d'échange.

9. Serveur de contrôle (110) exploitable de façon à contrôler l'enregistrement des communications d'un dispositif sans fil (100) conformément à un protocole d'enregistrement dans un système comportant le dispositif sans fil (100), un dispositif d'enregistrement (106) exploitable de façon à enregistrer les communications du dispositif sans fil (100), et le serveur de contrôle (110), le serveur de contrôle (110) étant configuré de façon à :
recevoir une alerte, en provenance du dispositif sans fil (100), laquelle identifie le fait que le dispositif sans fil (100) a détecté un événement indiquant un changement dans l'environnement d'enregistrement du dispositif sans fil (100) pendant que le dispositif sans fil (100) met en oeuvre une première politique d'enregistrement ;
comparer l'événement identifié à des événements définis par le protocole d'enregistrement, et sur la base de la comparaison, déterminer s'il s'agit d'ordonner au dispositif sans fil (100) de mettre en oeuvre une deuxième politique d'enregistrement ; et
transmettre une instruction au dispositif sans fil (100) afin de mettre en oeuvre la deuxième politique d'enregistrement.

10. Serveur de contrôle (110) selon la revendication 9, configuré en outre de façon à déterminer uniquement s'il s'agit d'ordonner au dispositif sans fil (100) de mettre en oeuvre la deuxième politique d'enregistrement, si le nombre d'alertes transmises depuis le dispositif sans fil (100) vers le serveur de contrôle (110), identifiant des connexions non réussies vers le dispositif d'enregistrement (106), dépasse un nombre seuil.

11. Serveur de contrôle (110) selon la revendication 9, le serveur de contrôle (110) étant configuré en outre de façon à stocker au moins un chiffre d'identification, et cas dans lequel l'événement détecté est celui où le dispositif sans fil (100) s'est connecté à un dispositif possédant le chiffre d'identification.

12. Serveur de contrôle (110) selon l'une quelconque des revendications 9 à 11, configuré en outre, avant la transmission d'une instruction depuis le serveur de contrôle (110) vers le dispositif sans fil (100), de façon à mettre en oeuvre la deuxième politique d'enregistrement, authentifier le dispositif sans fil (100) comme étant contrôlé par le serveur de contrôle (110), et, seulement si cette authentification est réussie, réaliser l'étape de transmission.

13. Dispositif sans fil (100) selon l'une quelconque des revendications 4 à 8, ou serveur de contrôle (110) selon l'une quelconque des revendication 9 à 12, l'événement détecté étant au moins l'un des suivants, à savoir : un changement de localisation du dispositif sans fil (100) depuis une première juridiction vers une deuxième juridiction ; une défaillance dans la connexion entre le dispositif sans fil (100) et le dispositif d'enregistrement (106) ; et le fait que le module d'identification de l'abonné du dispositif sans fil (100) a été remplacé.

14. Système comprenant :
un dispositif sans fil (100) exploitable conformément à une première et une deuxième politiques d'enregistrement, et configuré de façon à détecter un événement qui indique un changement dans l'environnement d'enregistrement du dispositif sans fil (100) ;
un dispositif d'enregistrement (106) exploitable de façon à enregistrer les communications du dispositif sans fil (100) ; et
un serveur de contrôle (110) exploitable de façon à contrôler l'enregistrement des communications du dispositif sans fil (100) conformément à un protocole d'enregistrement, cas dans lequel le dispositif sans fil (100) est configuré, pendant la mise en oeuvre de la première politique d'enregistrement, de façon à détecter l'événement et à transmettre une alerte au serveur de contrôle (110) identifiant l'alerte ; et
cas dans lequel le serveur de contrôle (110) est configuré de façon à comparer l'événement identifié à des événements définis par le protocole d'enregistrement, et sur la base de la comparaison, ordonner au dispositif sans fil (100) de mettre en oeuvre la deuxième politique d'enregistrement, et est configuré en outre de façon à transmettre une instruction au dispositif sans fil (100) pour mettre en oeuvre la deuxième politique d'enregistrement ; et
cas dans lequel le dispositif sans fil (100) est configuré en outre de façon à modifier le fonctionnement du dispositif sans fil (100) de sorte à mettre en oeuvre la deuxième politique d'enregistrement.

15. Supports lisibles par ordinateur qui, lors de leur exécution sur un processeur du dispositif sans fil (100), sont agencés de façon à réaliser la détection d'événements, la transmission d'alertes et les étapes de modification de concrétisation du procédé selon la revendication 1.
